# EUROPÄISCHE PATENTSCHRIFT

(11) **EP 0 517 025 B1**
(45) Veröffentlichungstag und Bekanntmachung des Hinweises auf die Patenterteilung: **02.08.1995**
(21) Anmeldenummer: 92108390.3
(22) Anmeldetag: 19.05.1992
(51) Int. Cl.: C08J 9/26, C08J 9/24

(54) **Verfahren zum thermoplastischen Verarbeiten nichtplastifizierbarer Polymerer**
Method of thermoplastic processing of non-thermoplastically processable polymers
Procédé pour le traitement thermoplastique de polymères non-thermoformables

(30) Priorität: 04.06.1991 DE 4118277
(43) Veröffentlichungstag der Anmeldung: 09.12.1992
(73) Patentinhaber: BASF Aktiengesellschaft, 67063 Ludwigshafen (DE)
(72) Erfinder: Sterzel, Hans-Josef, Dr., W-6701 Dannstadt-Schauernheim (DE); Meyer, Marion, Dr., W-6800 Mannheim 1 (DE)

(56) Entgegenhaltungen:
- EP-A- 0 114 746
- EP-A- 0 413 231
- US-A- 3 917 761
- WORLD PATENTS INDEX LATEST Derwent Publications Ltd., London, GB; AN89002705[01] ; & JP-A-63 278 943

## Beschreibung

Polymere Werkstoffe haben vielfältige Einsätze als Materialien in allen Bereichen der Technik gefunden. Insbesondere die thermoplastische Verarbeitbarkeit hat den thermoplastischen Kunststoffen zu einer raschen Marktdurchdringung verholfen. So erlaubt das Spritzgießverfahren die Massenfertigung komplex geformter Teile ohne die Notwendigkeit einer Nachbearbeitung. Durch Extrusion lassen sich Folien und komplexe Profile herstellen.

Es sind auch Polymere entwickelt worden, die vorteilhafte Eigenschaften aufweisen, die aber leider nicht thermoplastisch verarbeitbar sind. Derartige Polymere lassen sich ausgehend vom Pulver nur zu einfachen Formkörpern wie Scheiben oder Stangen oder Platten unter erhöhtem Druck bei erhöhter Temperatur sintern. Aus dem so erhaltenen Halbzeug werden dann spanend die eigentlichen Formteile in umständlicher Weise herausgearbeitet.

Eine große Gruppe vollaromatischer Polymerer, die sich durch eine Kombination von hoher Steifigkeit, Festigkeit, Unbrennbarkeit, Chemikalienbeständigkeit, Spannungsrißbeständigkeit und hoher Temperaturbeständigkeit auszeichnet, ist beispielsweise nicht thermoplastisch verarbeitbar. Beispiele sind Polyamide aus Terephthalsäure oder Isophthalsäure und Para- oder Metaphenylendiamin, Polyimide, Polyester aus p-Hydroxybenzoesäure, Poly-p-phenylen, Polybenzthiazole, Polythiazole, Polyimidazole, Polybenzimidazole, Polyoxadiazole, Polybisbenzoxazole, Polyoxazole, Polybenzoxazole oder Polychinoxaline.

Sie lassen sich höchstens aus Lösungen zu Fasern spinnen.

Ziel der Erfindung war es, für bisher nicht durch thermoplastische Verarbeitung verarbeitbare Polymere das Spritzgußverfahren als Formgebungsverfahren für die Massenfertigung komplex gestalteter Teile und die Extrusion zur Herstellung von Folien oder Profilen zugänglich zu machen.

Die Aufgabe wird dadurch gelöst, daß man die pulverförmigen Polymeren in einer Schmelze aus einem Polyacetal oder einer Mischung von Polyacetalen dispergiert, die so erhaltene Mischung abkühlt und granuliert, das Granulat einer Spritzgießmaschine oder einem Extruder zuführt und die gewünschten Formkörper durch die Spritzgußverarbeitung oder Extrusion durch Düsen erhält. Danach werden die Formkörper bei Temperaturen von 100 bis 150°C einer Atmosphäre ausgesetzt, die ein sauer reagierendes Gas enthält und dadurch das Polyacetal zu Formaldehyd depolymerisiert, der aus dem Teil entweicht.

Der zurückbleibende poröse Formkörper wird mit einer gasdichten Hülle allseitig umhüllt und dann bei erhöhter Temperatur unter Gasdruck oder Flüssigkeitsdruck unter Volumenschrumpf zum fertigen Formkörper gesintert.

Im folgenden wird die Erfindung detailiert beschrieben:
Zur Herstellung von Formteilen aus anorganischen Materialien ist bekannt, daß man ein Keramikpulver oder ein Metallpulver mit einem thermoplastischen Harz vermischt, die Mischung zu einem Formkörper verformt, das thermoplastische Harz entfernt und anschließend diesen porösen Formkörper zu dem eigentlichen Formkörper versintert. Als thermoplastisches Harz bzw. Bindemittel werden z.B. Polystyrol, Polypropylen, Polyethylen und Ethylen-Vinylacetat-Copolymere eingesetzt. Diese Bindemittel werden aus dem Formkörper durch Erhitzen auf Temperaturen von 300 bis 550°C während 3 bis 8 Stunden entfernt. Dabei werden die Bindemittel thermisch gespalten. Es muß sehr vorsichtig und langsam auf diese Temperaturen erhitzt werden, damit der Formkörper nicht durch unkontrollierten Zerfall der organischen Substanz und damit verbundener Rißbildung geschädigt wird. Aus diesem Grunde soll die Aufheiztemperatur nur 4°C/Stunde betragen. In der US-PS 4 671 912 werden sogar niedrigere Aufheiztemperaturen von 1 bis 2°C/Stunde, zumindest solange, bis die Hälfte des Bindemittels entfernt ist, empfohlen. Diese langen Aufheizperioden von mehreren Tagen vermindern die Wirtschaftlichkeit dieser Verfahren stark.

Zur Beschleunigung der Aufheizzeiten wird in der EP-PS 115 104 empfohlen, als Bindemittel ein Gemisch aus einem oxidierten Paraffinwachs oder einem oxidierten mikrokristallinen Wachs mit einer höheren Fettsäure einzusetzen. In der EP-PS 114 746 wird als Bindemittel ein Polyacetal vorgeschlagen.

Bei allen diesen Verfahren, bei denen Thermoplaste oder Wachse eingesetzt werden, muß der Formkörper zwecks pyrolytischer Entfernung des Bindemittels auf Temperaturen oberhalb des Erweichungspunktes des Bindemittels erhitzt werden, wodurch die Gefahr einer Verformung besteht.

Derartige Verfahren wären für die thermoplastische Verarbeitung der Polymerpulver auch nicht anwendbar, weil zur pyrolytischen Entfernung des Binders Temperaturen bis zu 550°C notwendig sind, Temperaturen, bei denen sich die Polymerpulver bereits zersetzen.

Es ist aber auch bekannt, das Bindemittel aus dem Grünling nicht pyrolytisch, sondern durch Extraktion mit einem Lösungsmittel zu entfernen. Gemäß der JP-OS 62/278160 wird als Lösungsmittel überkritisches Kohlendioxid bei 60°C und einem Druck von 200 kg/cm², gemäß der EP-PS 206 685 flüssiges Kohlendioxid bei Temperaturen von - 30°C bis 31,1°C eingesetzt. Für die Durchführung dieser Verfahren benötigt man jedoch spezielle Apparaturen.

Demgegenüber wurde ein Verfahren bekannt (DE 40 21 741 A1), das es erlaubt, die Binderphase schnell und ohne die beschriebenen Nachteile aus dem Formkörper zu entfernen. Dort wird als Binder ein Polyacetal eingesetzt, das durch Behandeln der Formkörper mit einer Atmosphäre, die Salpetersäure oder Bortrifluorid oder Bortrifluorid-Addukte enthält bei Temperaturen von 100 bis 150°C rückstandsfrei depolymerisiert wird.

Als Polyacetal setzt man sowohl Homopolymerisate als auch Copolymerisate von Polyoxymethylen mit Molmassen von 25 000 bis 75 000 ein. Unter Copolymerisaten seien die Polymerisate des Trioxans mit z.B. Ethylenoxid, 1,3-Dioxolan oder 1.3-Dioxepan verstanden, die in Mengen von z.B. 2 bis 8 Massen% vorliegen können.

Bei Verwendung von reinem Polyoxymethylen mit geringem Comonomeranteil als Bindemittel kann bei der Herstellung von Spritzgußteilen mit größeren Wandstärken ein Problem auftreten, welches durch die hohe Kristallisationsgeschwindigkeit des Polyoxymethylens hervorgerufen wird; die Schmelze erstarrt an der Wand der beim Spritzgießen verwendeten, normalerweise gekühlten Form schneller als im Inneren, d.h. der innere Bereich des Formkörpers kristallisiert später als der äußere Teil. Da die Kristallisation von einer Volumenkontraktion begleitet ist, entstehen Risse im Inneren des Formkörpers, da die bereits erstarrten Außenteile der Volumenkontraktion nicht mehr folgen können.

Dieser Nachteil tritt nicht auf, wenn statt eines einheitlichen Polyoxymethylens mit geringem Comonomergehalt eine Mischung zweier verschiedener Polyacetale B1 und B2 eingesetzt wird, wobei
B1) aus 70 bis 90, vorzugsweise 80 bis 88 Gew.-%, eines Polyoxymethylenhomopolymerisats oder eines Polyoxymethylencopolymerisats mit maximal 10, vorzugsweise 2 bis 7 mol-% an Comonomereinheiten, und
B2) aus 10 bis 30, vorzugsweise 10 bis 25, insbesondere 12 bis 20 Gew.-% eines Polyoxymethylencopolymerisats mit einem Comonomeranteil von 20 bis 99, vorzugsweise 25 bis 95 und insbesondere 25 bis 80 mol-% 1,3-Dioxolan, 1,3-Dioxan oder 1,3-Dioxepan oder deren Mischungen.
bestehen.

Derartige Polyoxymethylenhomo- oder -copolymerisate sind dem Fachmann an sich bekannt und in der Literatur beschrieben.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung bevorzugte Polyoxymethylencopolymere B1) bzw. B2) enthalten neben den wiederkehrenden Einheiten -OCH₂- noch wiederkehrende Einheiten der Formel 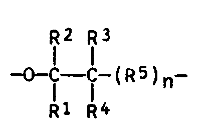
wobei R¹ bis R⁴ unabhängig voneinander ein Wasserstoffatom, eine C₁-C₄-Alkylgruppe oder eine halogensubstituierte Alkylgruppe mit 1 bis 4 C-Atomen und R⁵ eine -CH₂-, -CH₂O-, eine C₁-C₄-Alkyl- oder C₁-C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 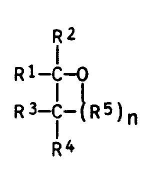
wobei R¹ - R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und Dioxepan als cyclische Ether genannt sowie linare Oligo- oder Polyformale wie Polydioxolan oder Polydioxepan als 5 Comonomere genannt.

Prinzipiell können die Polyoxymethylencopolymere B1) und B2) die gleichen wiederkehrenden Einheiten aufweisen, d.h. sich nur in derem Anteil unterscheiden.

Als Komponente B1) bzw. B2) ebenfalls geeignet sind Oxymethylenterpolymerisate, die beispielsweise durch Umsetzung von Trioxan, einem der vorstehend beschriebenen cyclischen Ether und einem dritten Monomeren, vorzugsweise einer bifunktionellen Verbindung der Formel 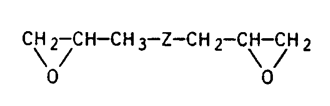
wobei Z eine chemische Bindung, -O- oder -ORO- (R= C₁-C₈-Alkylen oder C₂-C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2:1 sowie Diether aus 2 mol Glycidylverbindung und 1 mol eines aliphatischen Diols mit 2-8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol um nur einige Beispiele zu 25 nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylenhomo- bzw. Copolymerisate haben Schmelzpunkte von mindestens 150°C und Molekulargewichte (Gewichtsmittelwert) im Bereich von 5 000 bis 150 000, vorzugsweise von 7 000 bis 60 000.

Als Komponente B2) ebenfalls geeignet sind
Poly-1,3-dioxolan -O-CH₂-O-CH₂-CH₂- oder
Poly-1,3-dioxan -O-CH₂-O-CH₂-CH₂-CH₂- oder
Poly-1,3-dioxepan -O-CH₂-O-CH₂-CH₂-CH₂-CH₂-
oder deren Mischungen untereinander bzw. mit Polyoxymethylencopolymeren der vorstehend beschriebenen Art. Poly-1,3-dioxepan wird wegen seiner schnellen Depolymerisation unter sauren Bedingungen bevorzugt.

Poly-1,3-dioxolan, Poly-1,3-dioxan und Poly-1,3-dioxepan können nach analogen Verfahren wie die Polyoxymethylenhomo- bzw. -copolymerisate hergestellt werden, so daß sich hier nähere Angaben erübrigen. Das Molekulargewicht ist an sich nicht kritisch und liegt im allgemeinen im gleichen Bereich wie das Molekulargewicht der Polyoxymethylenhomo- oder -copolymerisate.

Unter den Bedingungen der Compoundierung oder Spritzgußverarbeitung tritt zwischen den Polyoxymethylenpolymerisaten B1) und B2) praktisch keine Umacetalisierung ein, d.h. es findet praktisch kein Austausch von Comonomereinheiten statt.

Damit wird auch der Kristallitschmelzpunkt der Komponente B1) nicht erniedrigt, es wird lediglich die Kristallisationszeit etwas erhöht (was gewünscht ist) und der kristalline Anteil etwas reduziert. Da der Kristallitschmelzpunkt der Hauptkomponente B1) nicht reduziert wird, bleibt die hohe Wärmeformbeständigkeit erhalten und die Gefahr des Verzugs bei der katalytischen Entbinderung wird verringert.

Zusätzlich können die thermoplastischen Massen auch übliche Zusatzstoffe und Verarbeitungshilfsmittl, die die rheologischen Eigenschaften der Mischungen bei der Verformung günstig beeinflussen, enthalten.

Die Herstellung der Mischungen aus Polyacetalbinder und Polymerpulver kann durch Mischen der Komponenten in üblichen Mischvorrichtungen wie Knetern oder Extrudern erfolgen. Bei der Abmischung auf Extrudern kann die Mischung extrudiert und granuliert werden.

Für die Verformung durch Spritzguß können die üblichen Schnecken- und Kolbenspritzgußmaschinen eingesetzt werden. Die Verformung erfolgt im allgemeinen bei Temperaturen von 170 bis 220°C und Drucken von 3 000 bis 20 000 kPa in Formen, die eine Temperatur von 80 bis 150°C aufweisen. Zur Folien- und Profilextrusion werden die üblichen Apparate eingesetzt.

Der Volumenanteil an Polymerpulver innerhalb der thermoplastischen Masse beträgt 45 bis 70 Vol.-%, vorzugsweise 50 bis 65 Vol.-%. Ein Teil dieses Volumenanteils kann gegebenenfalls durch die Steifigkeit erhöhende Füllstoffe wie Glasfasern, Kohlenstoffasern oder globuläre, mineralische Füllstoffe ersetzt sein, wobei dieser Anteil 50 % vom Volumenanteil des Polymerpulvers nicht übersteigen sollte.

Zur Entfernung des Bindemittels (Entbinderung) werden die nach der Verformung enthaltenen Körper vorzugsweise in Anlehnung an das Verfahren der älteren deutschen Patentanmeldungen P 39 29 869 bzw. 40 00 278 mit einer gasförmigen säurehaltigen Atmosphäre behandelt.

Diese Behandlung erfolgt nach dem erfindungsgemäßen Verfahren bei Temperaturen im Bereich von 100 bis 150°C über einen Zeitraum von 0,1 bis 50 h, vorzugsweise 0,5 bis 12 h.

Geeignete Säuren für die Behandlung in dieser Stufe des erfindungsgemäßen Verfahrens sind anorganische, bei Raumtemperatur bereits gasförmige, zumindest aber bei der Behandlungstemperatur verdampfbare Säuren. Beispielhaft sei HNO₃ genannt. Geeignete organische Säuren sind solche, die bei Normaldruck eine Siedetemperatur von weniger als 130°C haben, z.B. Ameisensäure, Essigsäure oder Trifluoressigsäure oder deren Mischungen.

Weiterhin geeignet als Säure sind BF₃ oder BF₃-Etherate. Ganz allgemein hängt die erforderliche Behandlungsdauer von der Behandlungstemperatur und der Konzentration der Säure in der Behandlungsatmosphäre, sowie von der Wandstärke der Formteile ab.

Wird ein Trägergas verwendet, so wird dieses im allgemeinen vorher durch die Säure geleitet und mit dieser beladen. Das so beladene Trägergas wird dann auf die Behandlungstemperatur gebracht, die zweckmäßigerweise höher als die Beladungstemperatur ist, um eine Kondensation der Säure zu vermeiden.

Vorzugsweise wird die Säure dem Trägergas über eine Dosiereinrichtung zugemischt und die Mischung erwärmt, um eine Kondensation der Säure zu vermeiden.

Die vorstehend beschriebene Behandlung wird so lange durchgeführt, bis das Bindemittel praktisch vollständig entfernt ist. Dies läßt sich leicht an der Gewichtsabnahme erkennen.

Um dichte Formkörper zu erhalten, müssen diese unter Druck isostatisch gesintert werden. Dazu müssen sie allseitig von einer dichten, verformbaren Hülle umgeben sein. Nur dann kann ein Druck allseitig auf den Formkörper wirken und dieser beim Sintern isotrop schwinden.

Dazu stehen verschiedene Möglichkeiten offen: Der poröse Formkörper kann in einen Lack getaucht werden, der nach Verdampfen des Lösungsmittels einen festen, plastischen Film ausbildet. Die Viskosität des Lacks muß so hoch sein, daß der Lack nicht in den Formkörper eindringt. Bevorzugt sind Lacke, die aus dem zu sinternden Polymeren und einem Lösungsmittel bestehen. Im Fall dieses arteigenen Überzugs darf der Lack auch in den porösen Formkörper eindringen.

Als Überzug sind auch solche auf der Basis von Polydimethylsiloxanen, Epoxidharzen, ungesättigten Polyesterharzen, Polyimidharzen, Polyamidimidharzen oder Polyesterimidharzen geeignet. Ebenfalls als Lacke geeignet sind Lösungen von hochmolekularen thermoplastischen Polymeren wie Polystyrol, Polystyrol/Acrylnitril-Copolymerisate, Polycarbonat, Polysulfon oder Polyethersulfon in niedrig siedenden Lösungsmitteln wie Aceton, Methylethylketon oder Dimethylformamid. Eine andere Möglichkeit besteht darin, daß man die porösen Formkörper in wäßrige Polymerdispersionen eintaucht und durch Trocknen der Dispersionen Polymerüberzüge ausbildet. Dabei ist es vorteilhaft, die Formkörper vor dem Tauchen auf 100 bis 150°C zu erwärmen oder dies direkt nach Entfernen des Binders zu tun, um an der Oberfläche eine sofortige Koagulation der Dispersion zu erreichen und damit ein Eindringen der Dispersion in die Poren zu vermeiden. Besonders vorteilhaft sind preiswerte Dispersionen auf der Basis von Styrol mit 2 bis zu 10 Gew.-% Butadien. Filme aus diesen Dispersionen weisen eine hohe Temperaturbeständigkeit auf und werden bei Temperaturen bis 300°C nicht zu niedrigviskos, weil der Butadienanteil teilweise vernetzt und damit der Film unter dem Druck nicht in die Poren eindringt. Auch wäßrige Sekundärdispersionen auf der Basis höhertemperaturbeständiger Polymerer wie Polyesterimide oder Polyamidimide sind geeignet, dichte Filme auf den porösen Formkörpern zu erzeugen.

Es ist aber auch möglich, filmbildende Polymere wie Polystyrol oder Polyethersulfon zu Teilchen mit Durchmessern von 2 bis 100 m Durchmesser zu vermahlen, diese in Wasser zu dispergieren und die porösen Formkörper mit einer derartigen Aufschlämmung zu bedecken.

Den Mahlschritt kann man sich sparen, indem man die Polymeren in einem Lösungsmittel löst und die Lösung in ein Nichtlösungsmittel einträgt und durch Ausfällen des Polymeren direkt eine Aufschlämmung von Polymerteilchen erzeugt.

Zur Erzeugung von Filmen mit Temperaturbeständigkeiten oberhalb von 400°C bringt man Filme auf der Basis von anorganischen Gläsern auf. Derartige Gläser enthalten erhöhte Anteile an Bleioxid, Borat und/oder Phosphat und weisen damit erniedrigte Erweichungstemperaturen auf. Die Gläser werden zermahlen und in Wasser oder einem organischen Lösungsmittel suspendiert.

Die Formkörper werden in die Suspension eingetaucht, Wasser oder Lösungsmittel verdampft und das Glaspulver verschmilzt im Autoklaven zu einer dichten Hülle.

Nachdem die Oberfläche der porösen Formkörper mit Material zur Ausbildung dichter Filme belegt ist, werden die Formkörper in einen Autoklaven gebracht, dort aufgeheizt, die dichten Filme ausgebildet und danach mit Druck beaufschlagt. Nach dem Sintern läßt man den Autoklaven abkühlen, holt die Formkörper heraus und entfernt die meist nur locker anliegende Hülle. Die Sinterbedingungen, Temperatur, Druck und Verweilzeit richten sich nach dem jeweils zu sinternden Polymeren.

Bei Sintertemperaturen unterhalb 450°C ist es auch möglich, innerhalb einer Flüssigkeit zu sintern, die eine bessere Wärmeübertragung als Gase ermöglicht. Außerdem kann der Flüssigkeitsdruck leicht durch ein Hydraulikaggregat aufgebracht werden. Als Flüssigkeit werden bevorzugt Orthokieselsäureester wie Si(OC₈H₁₇)₄ eingesetzt.

### Beispiel

In einen Doppelwellenextruder mit 30 mm Schneckendurchmesser werden 6.0 kg/h eines Polyoxymethylens dosiert, das 6 Gew.-% Butandiolformal als Comonomeres enthält und das Polyoxymethylen bei 190°C aufgeschmolzen. In eine zweite Öffnung stromabwärts werden 7.4 kg/h eines Polyimidpulvers mit 45 »m durchschnittlichem Pulverdurchmesser (Typ P84 von Firma Lenzing) in die Polyoxymethylenschmelze dosiert. Über zwei Knetblöcke von je 30 mm Länge im Abstand von 90 mm wurde das Polyimidpulver innig mit der Schmelze vermischt. Die Gewichtsdosierung war so gewählt, daß die Polyoxymethylen/Polyimid-Mischung einen Volumenanteil von 55 % Polyimid aufwies. Die Polyoxymethylen/Polyimid-Mischung wurde in ein Wasserbad extrudiert, abgekühlt und granuliert. Nach dem Trocknen wurde die gesamte Granulatmenge in sich gemischt und nochmals mittels eines Extruders aufgeschmolzen, gemischt, extrudiert, abgekühlt und getrocknet, um eine homogen zusammengesetzte Masse zu erhalten, die keine messbaren Schwankungen der Zusammensetzung infolge von Schwankungen des Massestroms der kontunierlich arbeitenden Dosierwaagen mehr aufwies.

Die so erhaltene Masse wurde mittels einer üblichen Spritzgußmaschine zu Prüfkörpern verarbeitet. Dabei betrugen die Massetemperatur 180°C und die Formwandtemperatur 120°C.

Zum Entfernen der Polyoxymethylenmatrix wurden die Prüfkörper mit maximal 4 mm Wanddicke in einen mit einem Ventilator zur Umwälzung der Atmosphäre ausgerüsteten Trockenschrank gelegt. Der Trockenschrank wurde auf 140°C aufgeheizt. Während des Aufheizens wurde der Trockenschrank mit Stickstoff gespült, um den Sauerstoffanteil der Atmosphäre unter 2 % zu reduzieren. Sodann wurden in den Trockenschrank mit ca. 30 l Volumen 15 ml/h 100%ige Salpetersäure dosiert. Dazu wurde der Inertgasstrom mit 200 l/h auf 140°C erhitzt und in den heißen Inertgasstrom die Salpetersäure eindosiert, wo sie sofort verdampfte und in den Trockenschrank mitgenommen wurde. Nach 2,5 h wurde die Säuredosierung beendet und der Trockenschrank nur noch mit Inertgas gespült. Nach 2,5 h Säurebehandlung enthielten die Formkörper kein Polyoxymethylen mehr. Deshalb waren sie relativ fragil.

Um die Formkörper für die Aufbringungen einer gas/flüssigkeitsdichten Hülle stabiler zu machen, wurde der Trockenschrank für 2 h auf 300°C aufgeheizt. Dabei tritt ein Vorsintern mit einem linearen Schrumpfen ca. 5 % ein und die Formkörper weisen genügend Festigkeit auf, um die Hülle aufzubringen.

Dazu wurde eine Lösung aus 25 Gew.-% des Polyimidpulvers in Dimethylacetamid als Lösungsmittel hergestellt. Die Formkörper wurden kurz in diese Lösung getaucht und überschüssige Lösung abtropfen gelassen. Nach dem Trocknen bei Raumtemperatur wurde die Prozedur wiederholt. Nach dieser Behandlung waren die äußeren Poren durch arteigenes Polyimid überbrückt und damit die notwendige gas/flüssigkeitsdichte Hülle aufgebaut.

Die Formkörper wurden in einen Autoklaven überführt, der Autoklav zur Entfernung der Luft mit Stickstoff gespült und sodann auf 350°C aufgeheizt. Nach Erreichen dieser Temperatur wurde der Stickstoffdruck auf 200 bar erhöht und der Autoklav 1 Stunde bei 350°C und 200 bar belassen. Danach wurde der Autoklav abkühlen gelassen und nach Erreichen von 30 bis 40°C der Überdruck abgelassen.

Die Spritzgußteile waren in ihren Maßen gleichmäßig um 18 % geschrumpft, entsprechend einem Volumenschrumpf von 44 %. Demnach enthielten die Formkörper noch eine Restporosität von ca. 1 %. Die folgenden Eigenschaften wurden gemessen: Zugfestigkeit 100 MPa und Bruchdehnung 5 % gemessen nach DIN 53455.

## Patentansprüche

1. Verfahren zum thermoplastischen Verarbeiten und Sintern nichtplastifizierbarer Polymerer, dadurch gekennzeichnet, daß man die pulverförmigen, nichtplastifizierbaren Polymeren in einer Schmelze aus einem Polyacetal oder einer Mischung von Polyacetalen dispergiert, die so erhaltene Mischung abkühlt, granuliert, das Granulat einer thermoplastischen Verarbeitung zuführt, durch Spritzgießen Formkörper oder durch Extrusion Folien oder Profile herstellt, die Formkörper einer Atmosphäre aussetzt, die ein sauer reagierenden Gas enthält, wodurch das Polyacetal depolymerisiert wird, den zurückbleibenden porösen Formkörper mit einem gas/flüssigkeitsundurchlässigen Film allseitig umhüllt, in einem Autoklaven aufheizt und unter allseitigem Druck den Formkörper isostatisch zum Fertigteil sintert.

2. Verfahren nach Anspruch 1, dadurch gekennzeichnet, daß man als Polyacetal Polyoxymethylen benutzt, das 0 bis 8 Gew.-% eines Comonomeren enthält.

3. Verfahren nach Anspruch 1, dadurch gekennzeichnet, daß man als Polyacetal eine Mischung aus
B1) 70 bis 90 Gew.-% eines Polyoxymethylenpolymerisats mit 0 bis 10 mol-% Comonomereinheiten und
B2) 10 bis 30 Gew.-% eines Polyoxymethylencopolymerisats mit einem Comonomeranteil von 20 bis 99 mol-%, 1,3-Dioxolan, 1,3-Dioxan oder 1,3-Dioxepan oder deren Mischungen oder homopolymeres Poly-1,3-dioxan, Poly-1,3-dioxolan oder Poly-1,3-dioxepan
verwendet.

4. Verfahren nach den Ansprüchen 1 bis 3, dadurch gekennzeichnet, daß der Volumenanteil an nichplastifizierbarem Polymerpulver in der Masse 45 bis 70 Vol.-%, vorzugsweise 50 bis 65 Vol.-% beträgt.

5. Verfahren nach den Ansprüchen 1 bis 4, dadurch gekennzeichnet, daß die Depolymerisation des Polyacetals bei 100 bis 150°C unter Normaldruck über einen Zeitraum von 0,1 bis 50 h, vorzugsweise von 0,5 bis 12 h unter dem Einfluß von Säuren, vorzugsweise Salpetersäure, Bortrifluorid oder Bortrifluorid-Etherat ausgeführt wird.

6. Verfahren nach den Ansprüchen 1 bis 5, dadurch gekennzeichnet, daß die nach dem Entfernen des Polyacetals porösen Formkörper durch Besprühen oder Tauchen mit einem Lack, einer Polymerlösung, mit einem vernetzbaren Polymeren, einer wäßrigen Polymerdispersion oder einer Aufschlämmung anorganischer niedrigschmelzender Gläser mit einem undurchlässigen verformbaren Film allseitig beschichtet werden.

7. Verfahren nach den Ansprüchen 1 bis 6, dadurch gekennzeichnet, daß die mit einem undurchlässigen Film beschichteten Formkörper bei 180 bis 800°C, vorzugsweise bei 220 bis 700°C unter Drücken von 1 bis 2 000, vorzugsweise 10 bis 400 bar isostatisch gesintert werden.

8. Massen zur Herstellung der Formkörper nach den Ansprüchen 1 bis 7.

9. Massen nach Anspruch 8, dadurch gekennzeichnet, daß sie bis zu 50 Vol.-% des Volumentanteils an nichtplastifizierbarem Polymerpulver verstärkende Füllstoffe enthalten.

10. Massen nach den Ansprüchen 8 und 9, dadurch gekennzeichnet, daß sie als nichtplastifizierbares Polymeres vollaromatische Polyimide enthalten.

11. Massen nach den Ansprüchen 8 und 9, dadurch gekennzeichnet, daß sie als nichtplastifizierbares Polymeres Polyaramide enthalten.

12. Massen nach den Ansprüchen 8 und 9, dadurch gekennzeichnet, daß sie als nichtplastifizierbares Polymeres Polythiazole, Polybenzthiazole enthalten.

13. Massen nach den Ansprüchen 8 und 9, dadurch gekennzeichnet, daß sie als nichtplastifizierbares Polymeres Polybisbenzoxazole, Polyoxazole, Polybenzoxazole, Polyoxadiazole enthalten.

14. Massen nach den Ansprüchen 8 und 9, dadurch gekennzeichnet, daß sie als nichtplastifizierbares Polymeres Polyimidazole, Polybenzimidazole enthalten.

15. Massen nach den Ansprüchen 8 und 9, dadurch gekennzeichnet, daß sie als nichtplastifizierbares Polymeres vollaromatische Polyester enthalten.

16. Massen nach den Ansprüchen 8 und 9, dadurch gekennzeichnet, daß sie als nichtplastifizierbares Polymeres Poly-p-phenylen enthalten.

17. Massen nach den Ansprüchen 8 und 9, dadurch gekennzeichnet, daß sie als nichtplastifizierbares Polymeres Polychinoxaline enthalten.

## Claims

1. A process for the thermoplastic processing and sintering of an unplastifiable polymer, which comprises dispersing the unplastifiable polymer in powder form in a melt of a polyacetal or a mixture of polyacetals, cooling the resulting mixture, granulating it, forwarding the granules to a thermoplastic processing stage, injection or extrusion molding, exposing the molding to an atmosphere which contains an acidic gas, thereby depolymerizing the polyacetal, enveloping the remaining porous molding on all sides in a gas/liquid-impermeable film, heating in an autoclave, and isostatically sintering the molding with pressure from all sides to form the finished article.

2. A process as claimed in claim 1, wherein the polyacetal used is a polyoxymethylene which contains from 0 to 8% by weight of a comonomer.

3. A process as claimed in claim 1, wherein the polyacetal used is a mixture of
B1) from 70 to 90% by weight of a polyoxymethylene polymer with from 0 to 10 mol% of comonomer units and
B2) from 10 to 30% by weight of a polyoxymethylene copolymer having a comonomer content of from 20 to 99 mol%, 1,3-dioxolane, 1,3-dioxane or 1,3-dioxepane or a mixture thereof or homopolymeric poly-1,3-dioxane, poly-1,3-dioxolane or poly-1,3-dioxepane.

4. A process as claimed in claim 1 or 2 or 3, wherein the proportion of unplastifiable polymer powder in the material is from 45 to 70% by volume, preferably from 50 to 65% by volume.

5. A process as claimed in claim 1 or 2 or 3 or 4, wherein the depolymerization of the polyacetal is carried out at from 100 to 150°C under atmospheric pressure over a period of from 0.1 to 50 h, preferably from 0.5 to 12 h, under the influence of an acid, preferably nitric acid, boron trifluoride or boron trifluoride etherate.

6. A process as claimed in claim 1 or 2 or 3 or 4 or 5, wherein the porous molding left behind after the polyacetal has been removed is coated on all sides with an impermeable formable film by spraying or dipping with a lacquer, a polymer solution, a crosslinkable polymer, an aqueous polymer dispersion or a slurry of an inorganic low melting glass.

7. A process as claimed in claim 1 or 2 or 3 or 4 or 5 or 6, wherein the molding coated with an impermeable film is isostatically sintered at from 180 to 800°C, preferably at from 220 to 700°C, at a pressure of from 1 to 2,000, preferably from 10 to 400, bar.

8. A composition for preparing a molding as set forth in claim 1 or 2 or 3 or 4 or 5 or 6 or 7.

9. A composition as claimed in claim 8, containing up to 50% by volume of a reinforcing filler, based on the volume share of the unplastifiable polymer powder.

10. A composition as claimed in claim 8 or 9, wherein the unplastifiable polymer is a wholly aromatic polyimide.

11. A composition as claimed in claim 8 or 9, wherein the unplastifiable polymer is a polyaramid.

12. A composition as claimed in claim 8 or 9, wherein the unplastifiable polymer is a polythiazole or polybenzothiazole.

13. A composition as claimed in claim 8 or 9, wherein the unplastifiable polymer is a polybisbenzoxazole, polyoxazole, polybenzoxazole or polyoxadiazole.

14. A composition as claimed in claim 8 or 9, wherein the unplastifiable polymer is a polyimidazole or polybenzimidazole.

15. A composition as claimed in claim 8 or 9, wherein the unplastifiable polymer is a wholly aromatic polyester.

16. A composition as claimed in claim 8 or 9, wherein the unplastifiable polymer is a poly-p-phenylene.

17. A composition as claimed in claim 8 or 9, wherein the unplastifiable polymer is a polyquinoxaline.

## Revendications

1. Procédé de frittage et de traitement thermoplastique de polymères non plastifiables, caractérisé en ce que l'on disperse les polymères pulvérulents, non plastifiables, dans une masse fondue constituée d'un polyacétal, ou d'un mélange de polyacétals, on refroidit le mélange ainsi obtenu, on le granule, on envoie le granulé à un traitement thermoplastique, on fabrique des articles moulés par moulage par injection, ou des profilés ou des feuilles par extrusion, on expose les articles moulés à une atmosphère qui contient un gaz à réaction acide, si bien que le polyacétal se dépolymérise, on enrobe de tous côtés les articles moulés poreux qui subsistent d'un film imperméable aux gaz/liquides, on les chauffe dans un autoclave et on fritte les articles moulés isostatiquement en pièce prête, sous une pression qui s'exerce de tous côtés sur les articles moulés.

2. Procédé suivant la revendication 1, caractérisé en ce que, à titre de polyacétal, on utilise du polyoxyméthylène qui contient de 0 à 8% en poids d'un comonomère.

3. Procédé suivant la revendication 1, caractérisé en ce que, à titre de polyacétal, on utilise un mélange constitué de
B1) 70 à 90% en poids d'un polymère de polyoxyméthylène comportant de 0 à 10% molaires d'unités comonomériques et
B2) 10 à 30% en poids d'un copolymère de polyoxyméthylène, comportant une proportion de comonomère de 20 à 99% molaires, de 1,3-dioxolanne, de 1,3-dioxanne, ou de 1,3-dioxépanne, ou de leurs mélanges ou de poly-1,3-dioxanne, poly-1,3-dioxolanne, ou poly-1,3-dioxépanne, homopolymérique.

4. Procédé suivant l'une quelconque des revendications 1 à 3, caractérisé en ce que la proportion volumique de poudre de polymère non plastifiable de 45 à 70% en volume, de préférence 50 à 65% en volume, dans la masse.

5. Procédé suivant les revendications 1 à 4, caractérisé en ce que la dépolymérisation du polyacétal se réalise à une température de 100 à 150°C, à la pression normale, en l'espace de 0,1 à 50 h, de préférence 0,5 à 12 h, sous l'influence d'acides, de préférence l'acide nitrique, le trifluorure de bore ou l'éthérate de trifluorure de bore.

6. Procédé suivant l'une quelconque des revendications 1 à 5, caractérisé en ce que l'on revêt ou enrobe de tous côtés les articles moulés poreux après l'élimination du polyacétal d'un film déformable imperméable, par pulvérisation ou trempage, d'une laque, d'une solution de polymère, d'un polymère réticulable, d'une dispersion aqueuse de polymère, ou d'une suspension de verres inorganiques à bas point de fusion.

7. Procédé suivant l'une quelconque des revendications 1 à 6, caractérisé en ce que l'on fritte isotactiquement les articles moulés revêtus d'un film imperméable à 180-800°C, de préférence 220-700°C, sous des pressions de 1 à 2.000 bars, de préférence 10 à 400 bars.

8. Masses pour la fabrication des articles moulés suivant l'une quelconque des revendications 1 à 7.

9. Masses suivant la revendication 8, caractérisées en ce qu'elles contiennent jusqu'à 50% en volume de la proportion volumique de poudre de polymère non plastifiable de charges de renforcement.

10. Masses suivant l'une quelconque des revendications 8 et 9, caractérisées en ce qu'elles contiennent des polyimides totalement aromatiques à titre de polymère non plastifiable.

11. Masses suivant l'une quelconque des revendications 8 et 9, caractérisées en ce qu'elles contiennent des polyaramides à titre de polymère non plastifiable.

12. Masses suivant l'une quelconque des revendications 8 et 9, caractérisées en ce qu'elles contiennent des polythiazoles, polybenzothiazoles à titre de polymère non plastifiable.

13. Masses suivant l'une quelconque des revendications 8 et 9, caractérisées en ce qu'elles contiennent des polybisbenzoxazoles, polyoxazoles, polybenzoxazoles, polyoxadiazoles à titre de polymère non plastifiable.

14. Masses suivant l'une quelconque des revendications 8 et 9, caractérisées en ce qu'elles contiennent des polyimidazoles, polybenzimidazoles à titre de polymère non plastifiable.

15. Masses suivant l'une quelconque des revendications 8 et 9, caractérisées en ce qu'elles contiennent des polyesters totalement aromatiques à titre de polymère non plastifiable.

16. Masses suivant l'une quelconque des revendications 8 et 9, caractérisées en ce qu'elles contiennent des poly-p-phénylène à titre de polymère non plastifiable.

17. Masses suivant l'une quelconque des revendications 8 et 9, caractérisées en ce qu'elles contiennent des polychinoxalines à titre de polymère non plastifiable.
